# EUROPEAN PATENT SPECIFICATION

(11) **EP 3 020 984 B1**
(45) Date of publication and mention of the grant of the patent: **25.07.2018**
(21) Application number: 14192992.7
(22) Date of filing: 13.11.2014
(51) Int. Cl.: F16B 39/04, F16B 39/08

(54) **A split pin safety cap**
Splintsicherheitskappe
Capuchon de sécurité goupille fendue

(43) Date of publication of application: 18.05.2016
(73) Proprietor: Safran Landing Systems UK Ltd, Gloucester, Gloucestershire GL2 9QH (GB)
(72) Inventor: Hilliard, Matthew, Liverpool, Merseyside L18 1LY (GB)
(74) Representative: Latham, Stuart Alexander

(56) References cited:
- FR-A- 706 190
- FR-A- 878 803
- GB-A- 317 445

## Description

### BACKGROUND OF THE INVENTION

A split pin or cotter pin is a two pronged metal fastener used to limit axial movement between a rod on the one hand, and a nut, washer or other part on the other hand.

In one example, a split pin can be used to inhibit rotation of a nut which has been wound on to a threaded rod provided with a hole that extends laterally from one side of the rod to the other. The nut has an axial face configured to define castellations and is wound until the hole is axially aligned with a space between adjacent castellations. The split pin is then inserted through the hole. The head of the split pin defines an end stop, limiting travel through the hole. The free ends of the split pin are then bent or splayed apart to inhibit removal of the split pin. The split pin inhibits rotation of the nut due to engagement with the castellations.

The tips of a split pin can be sharp, which can cause damage to relatively soft articles such as fabric or rubber that come into contact with a tip. This can be problematic in any situation where split pins are used, because clothes and/or skin can be torn by the splayed tips. Sharp tips can be particularly problematic in assemblies involving moving parts connected by flexible hoses, such as aircraft landing gear assemblies.

It is known to encapsulate split pin assemblies with sealant so that the tips of splayed split pin arms are encased in a protective coating.

However, the present inventor has identified that known solutions to the above-identified problem can be time consuming to implement, can be unreliable in view of the potential for wear, and are not suitable for some applications.

GB317445 and FR706190 each describe a locking device for securing a nut upon a bolt.

### SUMMARY OF THE INVENTION

According to a first aspect of the invention there is provided a split pin safety cap according to claim 1.

Thus, the split pin safety cap enables the ends of the split pin to be securely shielded once in an assembled condition. The split pin safety cap is held in place by the split pin due to the retention portion of the cap that extends in a generally orthogonal plane with respect to the axis of the bore. This provides a simple cap design that can be lightweight due to there being no requirement for a dedicated retention means. The configuration of the cap also enables it to be retrofitted to existing split pin assemblies.

The second opening is elongate and defines the recess. This gives rise to a simplified and efficient arrangement.

The second opening extends in a generally parallel plane with respect to the axis of the bore. This enables the free end of the split pin to be bent apart in a plane which is generally parallel with respect the bore axis. This is particularly advantageous in cases where the split pin is being used to retain a castellated nut because both arms of the pin react attempted unwinding of the nut in parallel and through their thickest dimension.

Where the opening extends in a generally parallel plane with respect to the axis of the bore, the opening can extend throughout the height of the body. This can provide a recess of maximum volume for receiving the bent ends of the pin.

The inner sidewalls of the body which define the bore are configured to define a bore with a generally hexagonal cross section.

The recess may extend through the one or more side walls. This configuration enables the ends of the pin to be shielded by the side walls, which simplifies the arrangement and enables the ends of the pin to be fully bent around the rod in the installed position.

The body may include an inwardly extending flange or cover arranged to limit axial travel of the rod through the bore.

The flange or cover can help in aligning the cap openings with the rod hole when seating the split pin safety cap.

The body may comprise a single, generally cylindrical side wall. This gives rise to a simplified and efficient arrangement.

The body may be formed from a plastics material, or a metal such as aluminium. Forming the body from a plastics material is advantageous as it provides a strong, low friction cover. A metal such as aluminium is preferred where the opening is vertical and extends throughout the height of the body for rigidity.

In accordance with a second aspect of the invention, there is provided a split pin assembly according to claim 6.

In accordance with a further aspect of the invention, there is provided a method according to claim 8.

### BRIEF DESCRIPTION OF THE DRAWINGS

Embodiments of the invention will now be described with reference to the accompanying drawings, in which:
Figure 1 is a diagram of a conventional split pin assembly;
Figures 2a and 2b are diagrams of a split pin in an initial state and a splayed state, respectively;
Figure 3 is a perspective diagram of a split pin safety cap.
Figure 4 is a perspective diagram of a split pin assembly including the split pin safety cap of Figure 3;
Figure 5 is a cross section diagram of the split pin assembly of Figure 4;
Figure 6 is a front perspective diagram of a split pin safety cap according to an embodiment of the invention;
Figure 7 is a rear perspective diagram of the split pin safety cap of Figure 6; and
Figure 8 is a perspective diagram of a split pin assembly according to an embodiment of the present invention including the split pin safety cap of Figure 6;
Figure 9 is a cross sectional view of the split pin assembly of Figure 8; and
Figure 10 is a perspective diagram of a split pin safety cap according to a further embodiment of the invention.

### DETAILED DESCRIPTION OF EMBODIMENTS

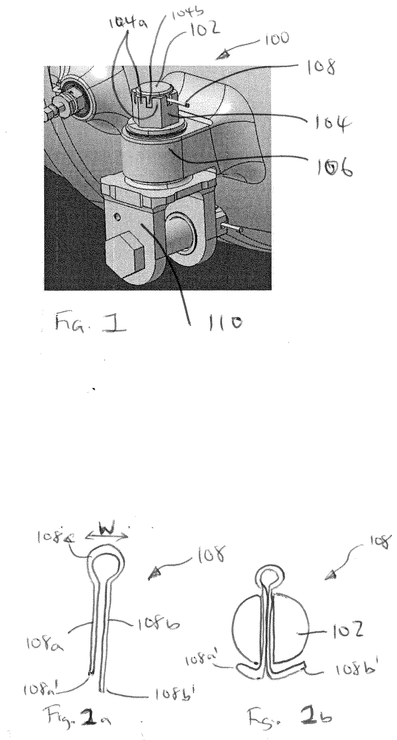

Figure 1 shows a conventional split pin assembly 100. A threaded rod 102 is attached to a first part 110 and extends through a second part 106. A nut 104 is wound along the rod 102 to force the two parts 106, 110 together. The rod 102 includes a hole that extends laterally from one side of the rod 102 to the other. The nut 104 has an axial face configured to define castellations 104a. The nut 104 can be wound along the rod 102 until the hole is axially aligned with a space 104b between adjacent castellations 104a. A split pin 108 can then be inserted through the hole so that the split pin 108 inhibits rotation of the nut 104 due to engagement with the castellations 104a.

Referring additionally to Figures 2a and 2b, the conventional split pin 108 is shown in more detail. In Figure 2a the split pin 108 is shown in a default insertion condition. The split pin 108 consists of a single piece of metal wire bent into two elongate, parallel arms 108a, 108b connected to one another via a head region 108c. The head region 108c is generally circular in shape and defines an end stop arranged to limit travel of the split pin 108 through the hole. Once sufficiently inserted, the free ends 108a', 108b' of the split pin 108 are bent or splayed apart to put the pin 108 in an installed condition which inhibits removal of the split pin 108, as shown in Figure 2b.

As will be appreciated by the skilled person, split pin diameters are standardised. The length of a split pin can be described as the distance between the contact point (where the head 108c meets the arms 108a, 108b) and the end of the arms 108a, 108b, or the end of the shortest arm if one is shorter than the other, as is the case in 'extended prong' and 'hammer lock' pins.

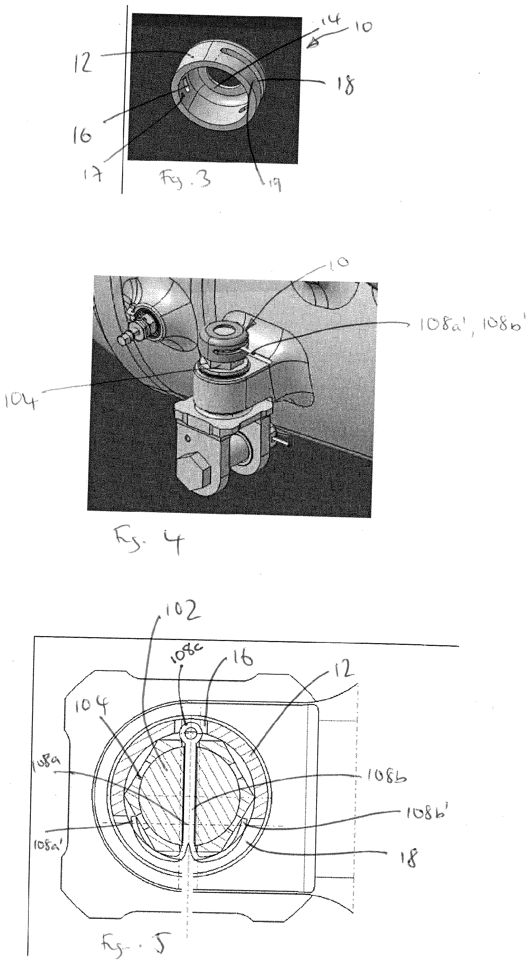

The ends 108a', 108b' of the pin 108 can be sharp. Although the bent portions can be made to roughly conform to the outer surface of the rod 102, they can nevertheless catch skin, clothing or other relatively soft article, causing damage to them, as well as weakening the splayed pin arms which if sheared could result in the pin 108 falling out of the hole, enabling the nut 104 to unintentionally unwind from the rod 102. Referring to Figures 3 to 5, a split pin safety cap 10 is shown.

The cap 10 has a generally cylindrical side wall 12 that is open on both axial ends. The bore of the cap 10 is sized to receive a rod, such as the rod 102 of Figure 1. The bore can be sized such that the inner face of the side wall 12 provides an interference fit with the rod.

The cap 10 can include one or more non-cylindrical sidewalls; for example the cap 10 can have a generally rectangular or hexagonal cross section.

One end of the side wall 12, which corresponds to the top of the cap 10 in use, extends radially inwardly to define a flange or lip 14 configured to inhibit passage of the rod so as to define an end stop against which the tip of the rod can engage when the cap 10 is properly seated.

Any suitable end stop means can be provided; for example, the cap 10 can be closed at one end, or can include a number of radial projections extending inwardly from the end of the wall 12. In some alternative embodiments, the cap 10 does not include end stop means.

The side wall 12 includes a first opening 16 which extends through the thickness of the side wall 12 to provide a passageway between the bore of the cap 10 and the outside environment. The first opening 16 is sized to receive an appropriate split pin when in its default configuration as shown in Figure 2a. The slot 16 can have a length that is between 1.1 and three times the diameter of the pin 108. In practice, the free end portions of the arms 108a, 108b can be clipped following assembly to leave convenient lengths.

It is preferred that the first opening 16 is in the form of an elongate slot which extends in an orthogonal plane with respect to the bore axis and is sized to receive the split pin head 108c of width W so that the head 108c can be shielded by the cap 10.

The side wall 12 also includes a second opening 18 on the opposite side with respect to the first opening 16. The second opening 18 extends through the thickness of the side wall 12 to provide a passageway between the bore of the cap 10 and the outside environment. The second opening 18 is sized to receive at least some of the splayed arms of an appropriate split pin when in the bent configuration as shown in figure 2b.

It is preferred that the second opening 18 is in the form of an elongate slot which extends in an orthogonal plane with respect to the bore axis and is preferably sized to receive the tips 108a', 108b' of the arms 108a, 108b when installed such that the tips 108a', 108b' can be shielded by the cap 10 to inhibit them catching relatively soft articles that come into contact with the cap 10. This arrangement also provides increased surface area which works with the assembled split pin to inhibit removal of the cap 10. The slot 18 can extend between a quarter and half way around the side wall 12.

In use, the cap 10 is placed on top of the rod 102 so as to form an interference fit with the nut 104. The first opening 16 is aligned with one side of the lateral hole through the rod 102 so that the split pin 108 can be inserted through the lateral hole. Once fully inserted, the free ends 108a', 108b' of the pin 108 protrude from the cap 10 through the second opening 18 as shown in Figure 4. The protruding portions of the arms 108a, 108b can then be bent backwards towards the rod 102 such that at least the tips 108a', 108b', and in some cases the entire protruding portions of the arms 108a, 108b, are received within the recess defined by the elongate second opening 18, as shown in Figure 5. Advantageously, the first opening 16 and second opening 18 enable the split pin 108 to retain the cap 10 on the rod due to the portions of the split pin 108 which reside within the openings 16, 18. The body of the cap 10 therefore defines retention portions 17, 19 situated between the openings 16, 18 on the one hand and the bottom edge of the cylindrical side wall 12 on the other hand, the retention portions 17, 19 serving to retain the cap 10 on the rod 102 when the split pin 108 is in the installed condition.

The second opening can be similar in size and shape to the first opening, in which case the cap can be provided with one or more recesses, which can be bind holes or can extend fully through the side wall(s), to receive the free ends of the pin when in the installed condition.

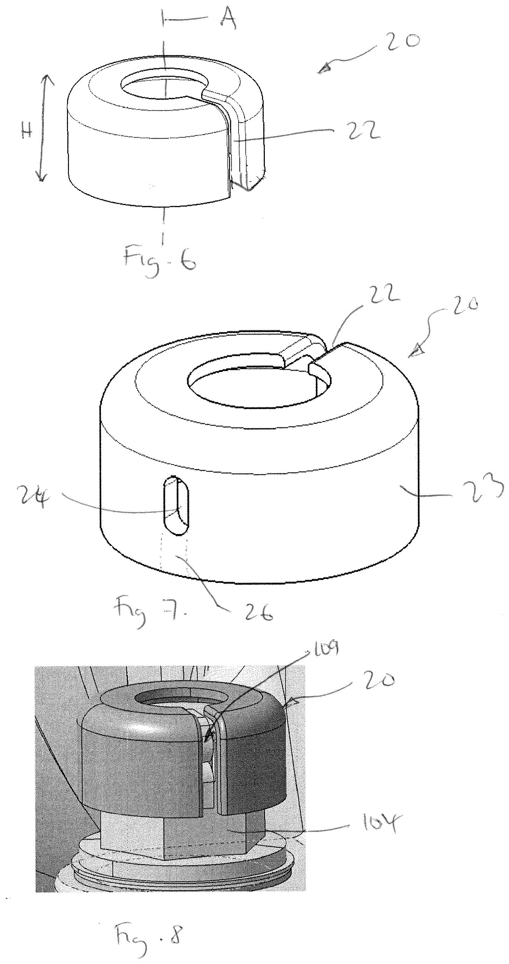

Referring to Figures 6 and 7, a split pin safety cap 20 according to an embodiment of the invention is shown. The split pin safety cap 20 of this embodiment is similar to the split pin safety cap 10 described above; for brevity, the following description will focus on the differences.

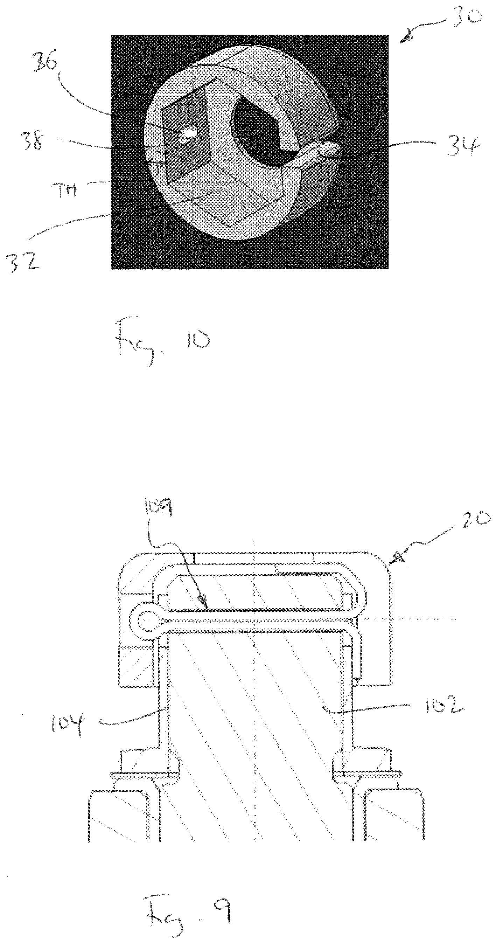

The elongate second opening 22 in this embodiment is vertical i.e. extends in a plane that is generally parallel with respect to the bore axis A. This enables the free ends of the split pin 109 to be bent apart in a plane which is generally parallel with respect the bore axis A, as illustrated in the split pin assembly of Figures 8 and 9. This arrangement is particularly advantageous in cases where the split pin 109 is being used to retain a castellated nut 104 or the like because both arms of the pin 109 react attempted unwinding of the nut 104 in parallel and through their thickest dimension, which can reduce the likelihood of the installed pin 109 being sheared by the nut 104. Where the first opening 24 is elongate, the slot 24 can extend generally parallel with respect to the bore axis A to accommodate the head of the split pin 109.

The first opening 24 enables the split pin 109 to retain the cap 20 on the head of the split pin 109 residing within the second opening 24. The body of the cap 20 therefore defines a retention portion 26 situated between the opening 24 one the one hand and the bottom edge of the cylindrical side wall 23 on the other hand, the retention portion 26 serving to retain the cap 20 on the rod 102 when the split pin 109 is in the installed condition.

In the illustrated embodiment the second opening 22 extends throughout the height H of the body. This can provide a recess 22 of maximum volume for receiving the bent ends of the pin. However, in other embodiments the second opening and/or recess 22 can take any suitable configuration, as described above with reference to the earlier embodiments.

Referring to Figure 10, a split pin safety cap 30 according to a further embodiment of the invention is shown. The split pin safety cap 30 of this embodiment is similar to the split pin safety cap 20 described above; for brevity, the following description will focus on the differences.

The inner side walls 32 of the cap 30 which define the bore are arranged so as to have a generally hexagonal cross section. This provides a bore which conforms to the shape of a nut, which is particularly advantageous for embodiments employing a vertical second opening 34 in which the cap is retained on the rod following installation of the pin only by the head of the pin. The first opening 36 of the illustrated embodiment is therefore formed through a relatively thick portion TH of the cap body, thereby providing an optimum amount of overlap with the head of the assembled pin. Put another way, the retention portion 38 of the body can act upon a majority of the pin head, inhibiting removal of the pin. The conforming bore profile reduces the likelihood of the pin head moving out of the first opening 36.

It should be noted that a split pin safety cap according to any embodiment of the invention can be provided with a bore arranged to conform to a rod or other fixing upon which with cap is intended to be mounted.

A split pin safety cap according to any embodiments of the invention can be formed from any suitable material, such as a plastics or metallic material. Preferably, the material is chosen to provide a robust, lightweight, low friction cover; for example, a plastic such as nylon or polyoxymethylene. In other embodiments a metal such as aluminium can be chosen to provide a stiff, lightweight cover. A metal preferred where the opening is vertical and extends throughout the height of the body, for rigidity.

Thus, the split pin safety cap according to embodiments of the invention enables the ends of the split pin to be securely shielded once in an assembled condition. The split pin safety cap is held in place by the split pin, which provides a simple cap design that can be lightweight due to there being no requirement for a dedicated retention means. The configuration of the cap also enables it to be retrofitted to existing split pin assemblies.

It should be noted that the above-mentioned embodiments illustrate rather than limit the invention, and that those skilled in the art will be capable of designing many alternative embodiments without departing from the scope of the invention as defined by the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. A split pin safety cap (20, 30) for encapsulating free ends of an installed split pin (108), the split pin safety cap having a body comprising one or more side wall (32) which together define a bore arranged to receive an end portion of a rod, diametrically opposing first (24, 36) and second openings (22, 34) formed through the one or more side walls, each opening being sized to receive the arms (108a', 108b') of the split pin when the split pin is in an insertion condition to permit the arms of the split pin to be inserted through a lateral hole in the rod, and at least one recess sized to receive the free ends of the split pin when the split pin is in an installed condition, wherein the body includes a retention portion (26, 38) situated between the first opening and an end face of the one or more side walls, the retention portion serving to retain the cap on the rod when the split pin is in the installed condition **characterised in that** the second opening is elongate and defines the recess and the second opening (22, 34) extends in a generally parallel plane with respect to the axis (A) of the bore.

2. A split pin safety cap (20, 30) according to claim 1, wherein the opening extends throughout the height of the body.

3. A split pin safety cap (20, 30) according to any preceding claim, wherein the body includes an inwardly extending flange or cover arranged to limit axial travel of the rod through the bore.

4. A split pin safety cap (20, 30) according to any preceding claim, wherein the body comprises a generally cylindrical side wall.

5. A split pin safety cap (20, 30) according to any preceding claim, wherein inner sidewalls of the body which define the bore are configured to define a bore with a generally hexagonal cross section.

6. A split pin assembly comprising:
a rod (102) including a lateral hole;
a split pin safety cap (20, 30) according to any preceding claim provided on the rod, or on a fixing coupled to the rod; and
an assembled split pin (108) which extends through the first opening of the cap, through the lateral hole though the rod and has free ends disposed within the cap recess.

7. A split pin assembly according to claim 6, wherein the bore of the cap is arranged to conform in shape to the rod or fixing.

8. A method of forming a split pin assembly, comprising the steps of:
placing a split pin safety cap (20, 30) according to any of claims 1 to 5 on a rod including a lateral hole;
aligning the first and second cap openings with the lateral hole;
inserting a split pin through the first and second cap openings and the lateral hole; and
bending the free ends of the split pin into one or more recesses in the cap.

## Patentansprüche

1. Splintsicherheitskappe (20, 30) zum Einkapseln freier Enden eines installierten Splints (108), die Splintsicherheitskappe hat einen Körper, der eine oder mehrere Seitenwände (32) aufweist, die zusammen ein Loch definieren, dass angeordnet ist, einen Endbereich eines Bolzens aufzunehmen, diametral gegenüberliegende erste (24, 36) und zweite Öffnungen (22, 34), die durch die eine oder mehreren Seitenwände gebildet sind, jede Öffnung hat eine Größe, um die Arme (108a', 108b') des Splints aufzunehmen, wenn der Splint in einem Einsetzzustand ist, der es erlaubt, die Arme des Splints durch ein seitliches Loch in dem Bolzen einzusetzen, und mindestens eine Aussparung, die eine Größe hat, um die freien Enden des Splints aufzunehmen, wenn der Splint in einem installierten Zustand ist, wobei der Körper einen Rückhaltebereich (26, 38) beinhaltet, der zwischen der ersten Öffnung und einer Endfläche von der einen oder der mehreren Seitenwänden gelegen ist, der Rückhaltebereich dient zum Festhalten der Kappe an dem Bolzen, wenn der Splint in dem installierten Zustand ist, gekennzeichnet darin, dass die zweite Öffnung länglich ist und die Aussparung definiert und die zweite Öffnung (22, 34) sich in einer im Allgemeinen parallelen Ebene bezüglich der Achse (A) des Lochs erstreckt.

2. Splintsicherheitskappe (20, 30) gemäß Anspruch 1, wobei die Öffnung sich durchgehend der Höhe des Körpers erstreckt.

3. Splintsicherheitskappe (20, 30) gemäß einem der vorhergehenden Ansprüche, wobei der Körper einen sich nach innen erstreckenden Kragen oder eine Abdeckung beinhaltet, die angeordnet sind, axiale Bewegung des Bolzens durch das Loch zu begrenzen.

4. Splintsicherheitskappe (20, 30) gemäß einem der vorhergehenden Ansprüche, wobei der Körper eine im Allgemeinen zylindrische Seitenwand aufweist.

5. Splintsicherheitskappe (20, 30) gemäß einem der vorhergehenden Ansprüche, wobei innere Seitenwände des Körpers, die das Loch definieren, konfiguriert sind, ein Loch mit einem im Allgemeinen hexagonalen Querschnitt zu definieren.

6. Splintanordnung aufweisend:
ein Bolzen (102), der ein seitliches Loch beinhaltet;
eine Splintsicherheitskappe (20, 30) gemäß einem der vorhergehenden Ansprüche, der an dem Bolzen oder an einer Befestigung, die mit dem Bolzen gekoppelt ist, vorgesehen ist; und
einen montierten Splint (108), der sich durch die erste Öffnung der Kappe, durch das seitliche Loch durch den Bolzen erstreckt und freie Enden hat, die innerhalb der Kappenaussparung angeordnet ist.

7. Splintanordnung gemäß Anspruch 6, wobei das Loch der Kappe angeordnet ist, um sich in der Form an den Bolzen oder die Befestigung anzupassen.

8. Verfahren zum Bilden einer Splintanordnung, aufweisend die Schritte:
Platzieren einer Splintsicherheitskappe (20, 30) gemäß einem der Ansprüche 1 bis 5 an einen Bolzen, der ein seitliches Loch beinhaltet;
Ausrichten der ersten und zweiten Kappenöffnungen mit dem seitlichen Loch;
Einfügen eines Splints durch die erste und zweiten Kappenöffnungen und das seitliche Loch; und
Biegen der freien Enden des Splints in eine oder mehrere Aussparungen in der Kappe.

## Revendications

1. Capuchon de sécurité à goupille fendue (20, 30) destiné à encapsuler les extrémités libres d'une goupille fendue (108) installée, ledit capuchon de sécurité à goupille fendue possédant un corps comprenant une ou plusieurs paroi(s) latérale(s) (32) qui définissent ensemble un alésage agencé de manière à recevoir une partie d'extrémité d'une tige, des première (24, 36) et seconde (22, 34) ouvertures diamétralement opposées formées à travers la ou les paroi(s) latérale(s), chaque ouverture ayant des dimensions adaptées pour recevoir les branches (108a', 108b') de la goupille fendue lorsque la goupille fendue est dans un état d'insertion afin de permettre aux branches de la goupille fendue d'être insérées à travers un orifice latéral dans la tige, et au moins un évidement ayant des dimensions adaptées pour recevoir les extrémités libres de la goupille fendue lorsque la goupille fendue est dans un état installé, dans lequel le corps inclut une partie de rétention (26, 38) située entre la première ouverture et une face d'extrémité de la ou des paroi (s) latérale(s), ladite partie de rétention servant à retenir le capuchon sur la tige lorsque la goupille fendue est dans l'état installé, **caractérisé en ce que** la seconde ouverture est allongée et définit l'évidement et la seconde ouverture (22, 34) s'étend dans un plan généralement parallèle à l'axe (A) de l'alésage.

2. Capuchon de sécurité à goupille fendue (20, 30) selon la revendication 1, dans lequel l'ouverture s'étend sur l'intégralité de la hauteur du corps.

3. Capuchon de sécurité à goupille fendue (20, 30) selon l'une quelconque des revendications précédentes, dans lequel le corps inclut une bride qui s'étend vers l'intérieur ou un couvercle agencé de manière à limiter la course axiale de la tige à travers l'alésage.

4. Capuchon de sécurité à goupille fendue (20, 30) selon l'une quelconque des revendications précédentes, dans lequel le corps comprend une paroi latérale généralement cylindrique.

5. Capuchon de sécurité à goupille fendue (20, 30) selon l'une quelconque des revendications précédentes, dans lequel des parois latérales internes du corps qui définissent l'alésage sont configurées pour définir un alésage ayant une section transversale généralement hexagonale.

6. Ensemble de goupille fendue comprenant :
une tige (102) comportant un orifice latéral ;
un capuchon de sécurité à goupille fendue (20, 30) selon l'une quelconque des revendications précédentes placé sur la tige, ou sur une attache couplée à la tige ; et
une goupille fendue assemblée (108) qui s'étend à travers la première ouverture du capuchon, à travers l'orifice latéral à travers la tige et possède des extrémités libres disposées à l'intérieur de l'évidement du capuchon.

7. Ensemble de goupille fendue selon la revendication 6, dans lequel l'alésage du capuchon est agencé de manière à épouser, dans sa forme, la tige ou l'attache.

8. Procédé de fabrication d'un ensemble de goupille fendue, comprenant les étapes consistant à :
placer un capuchon de sécurité à goupille fendue (20, 30) selon l'une quelconque des revendications 1 à 5, sur une tige comportant un orifice latéral ;
aligner les première et seconde ouvertures de capuchon avec l'orifice latéral ;
insérer une goupille fendue à travers les première et seconde ouvertures de capuchon et l'orifice latéral ; et
replier les extrémités libres de la goupille fendue dans un ou plusieurs évidement(s) prévu(s) dans le capuchon.
